Europäisches Patentamt

European Patent Office

Office européen des brevets

(19)

(11) **EP 0 621 712 B1**

(12) **EUROPEAN PATENT SPECIFICATION**

(45) Date of publication and mention
of the grant of the patent:
**07.03.2001   Bulletin 2001/10**

(51) Int Cl.⁷: **H04L 1/20**

(21) Application number: **94106754.8**

(22) Date of filing: **06.06.1990**

(54) **Distortion canceller for line receivers**

Verzerrungsauslöscher für Leitungsempfänger

Annulateur de distortion pour récepteur de ligne

(84) Designated Contracting States:
**FR GB**

(30) Priority: **13.06.1989  JP  15127489**
             **13.06.1989  JP  15127389**

(43) Date of publication of application:
**26.10.1994   Bulletin 1994/43**

(62) Document number(s) of the earlier application(s) in
accordance with Art. 76 EPC:
**90908639.9 / 0 433 458**

(73) Proprietor: **FUJITSU LIMITED**
**Kawasaki-shi, Kanagawa 211 (JP)**

(72) Inventors:
 • **Kaku, Takashi, c/o Fujitsu Limited**
 **Nakahara-ku, Kawasaki-shi, Kanagawa 211 (JP)**
 • **Kishimoto, Hiroki, c/o Fujitsu Limited**
 **Nakahara-ku, Kawasaki-shi, Kanagawa 211 (JP)**
 • **Hirao, Kyoko, c/o Fujitsu Limited**
 **Nakahara-ku, Kawasaki-shi, Kanagawa 211 (JP)**

(74) Representative: **Stebbing, Timothy Charles et al**
**Haseltine Lake & Co.,**
**Imperial House,**
**15-19 Kingsway**
**London WC2B 6UD (GB)**

(56) References cited:
    **US-A- 3 727 134         US-A- 3 887 874**

 • **IBM TECHNICAL DISCLOSURE BULLETIN,**
   **vol.18, no.8, January 1976 pages 2548 - 2552**
   **DESBLACHE & GODARD 'Phase Jitter**
   **Attenuation using a Kalman Predictor'**

**Description**

The present invention relates to a system for detecting and cancelling transmission line deterioration factors and particularly to a line signal deterioration removing system, to be employed for a data modem, which effectively removes a phase jitter factor.

Recently, there has been increasing use of data transmission utilising telephone lines having transmission bands in the voice frequency range. In such a data transmission system, a so-called modem, usually affording a modulator for sending and a demodulator for receiving, is provided, and various line deterioration factors generated in a line between modems provided at the sending side and the receiving side are removed by such modems.

Particularly with a recent modulation system giving an improved data transmission rate through the introduction of a multiphase modulation system, it is desired to equalise, with high accuracy, various kinds of signal deterioration which occur in relation to the phases of the signals to be transmitted. These include intersymbol interference occurring on the line, frequency offset generated due to differences of carrier frequencies for modulation and demodulation, and phase jitter generated due to fluctuation of power source voltage.

In a case in which a telephone line with a frequency range 0.3 to 3.4 Khz is used, it is known that the following typical deterioration factors must be considered:-

   (1) intersymbol interference,
   (2) phase error and frequency offset,
   (3) phase jitter.

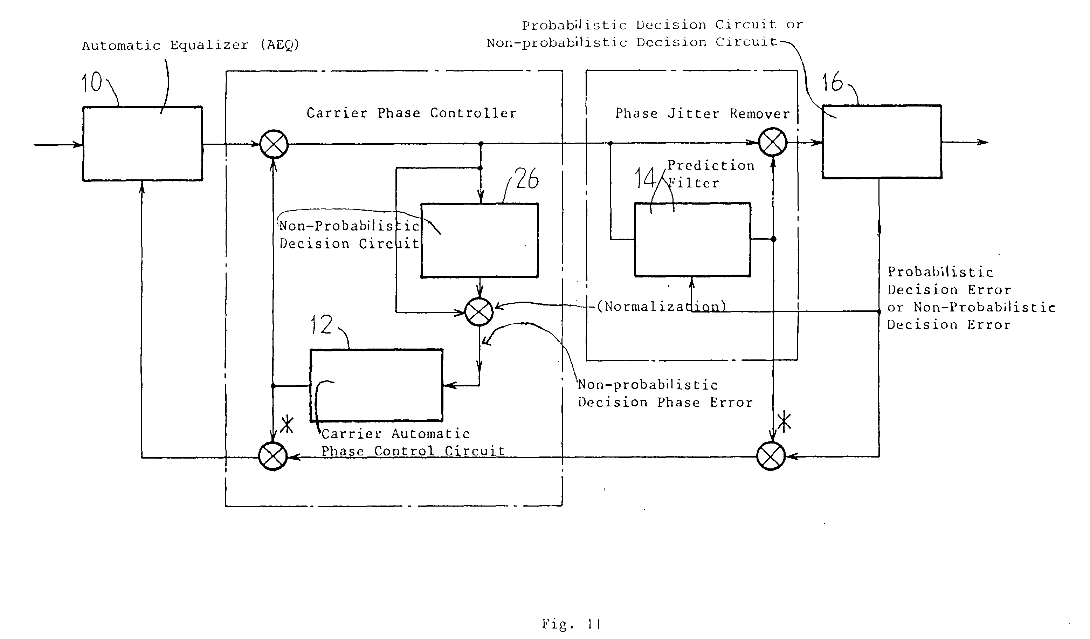

For the equalisation of characteristics which are considered as deterioration factors, signal deterioration has been compensated at the receiving side with a structure as shown in Fig. 11.

Fig. 11 is a structural diagram of an algorithm of operations within a modem on the receiving side, in accordance with the prior art. Such an algorithm is executed by programs using digital signal processing LSIs and microprocessors.

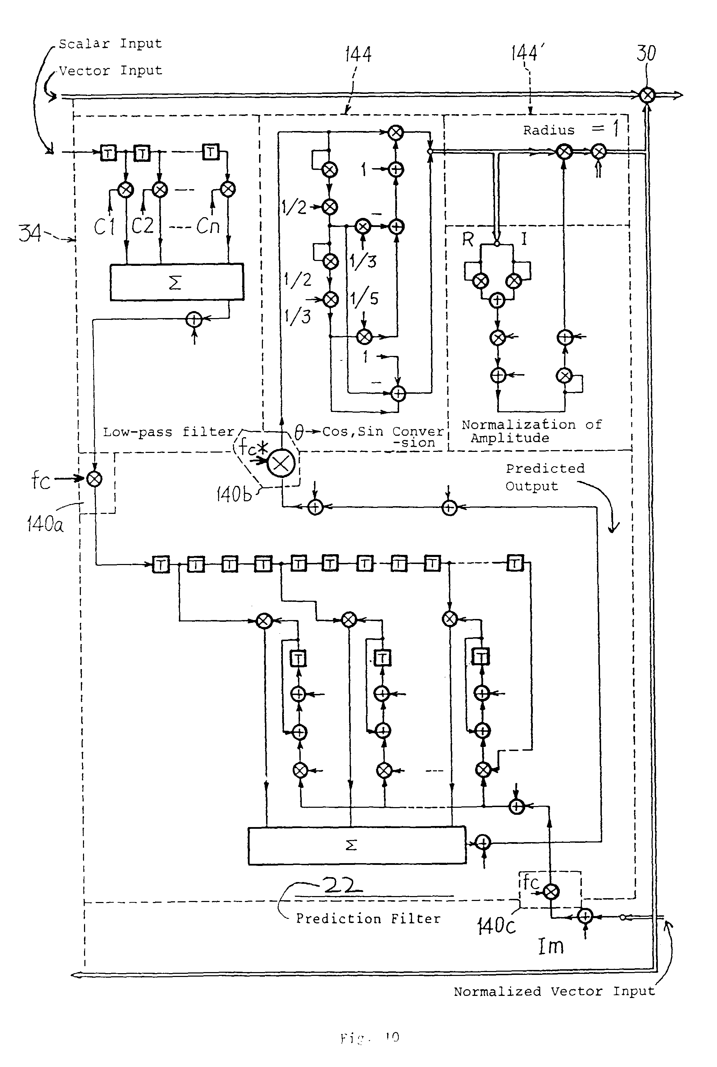

In Fig. 11, 10 is an automatic equaliser (AEQ) which is, for example, formed by a transversal filter. A base band signal after demodulation or a pass band signal before demodulation, received from the transmission line, is input to the automatic equaliser as coordinate data (vector data) corresponding to signal points in a complex plane. An equalised output is provided by removing the intersymbol interference element (the line deterioration factor 1 mentioned above) from such an input signal.

In the stage following equaliser 10, a carrier phase controller, comprising a carrier automatic phase control circuit (CAPC) 12 and a hard decision circuit 26 is provided. CAPC 12 foresees frequency offset and phase error included in the equalised output of equaliser 10 using an integral operation of quadratic form.

An output of CAPC 12 is vector multiplied (a) with the equalised output of equaliser 10 and (b) with a feedback signal to the equaliser 10 at the position where a conjugate vector ∗ is indicated by a multiplication symbol ⊗. Multiplication with the output of automatic equaliser 10 means that phase rotation is stopped, namely demodulation, whilst multiplication with the feedback signal to the automatic equaliser 10 means the addition of phase rotation, namely modulation. The principle of removing carrier frequency offset with such a structure is based on the principle that the phase of the output of automatic equaliser 10 rotates at a constant angular velocity due to the influence of carrier frequency offset but that this rotation can be stopped by multiplying with an output of CAPC 12.

To the carrier automatic phase control circuit 12 there is input a hard non-probabilistic decision error given as a phase difference between a non-probabilistic decision point and the receiving point by a non-probabilistic decision circuit 26. CAPC 12 computes the frequency offset and phase error element included in the output of equaliser 10 based on such hard decision error. The computation result is multiplied with the equaliser output. This structure is known as the non-probabilistic decision error feedback system because of the non-probabilistic decision error obtained from the decision output of the non-probabilistic decision circuit 26.

Following the carrier phase controller, a phase jitter remover including a prediction filter circuit 14 is provided.

The prediction filter circuit 14 predicts a phase jitter element by means of a prediction filter. An output thereof is multiplied with an output value of the carrier phase controller in a part of circuit 14 for multiplication of code in order to remove the phase jitter element from the output of the carrier phase controller.

Respective line deterioration factors such as intersymbol interference, frequency offset, phase error and phase jitter are removed and the receiving point information after such processing is finally applied to a soft (probabilistic) decision circuit or non-probabilistic decision circuit 16.

A probabilistic decision circuit decides, based on the input value, the most likely signal point taken by the received signal, by the well-known Viterbi decoding.

A non-probabilistic decision circuit makes a non-probabilistic decision in which, as for the above-mentioned non-probabilistic decision, signal points corresponding to the regions assigned to each complex space are decided using tables corresponding to the values of respective regions.

Decision error, given as an error between the decision point of the probabilistic decision circuit or non-probabilistic decision circuit 16 and the signal point, is fed back to the prediction filter circuit 14 as a normalised output, for optimisation control of the prediction filter circuit 14. Moreover, this error is also fed back to the automatic equaliser 10 through a couple of multipliers.

In such a prior art system, intersymbol interference, which is a transmission line signal deterioration factor, is removed by the automatic equaliser 10, whilst frequency offset and phase error are removed by the carrier phase controller and phase jitter is removed by the phase jitter remover.

However, when the transmission rate of a transmission line used to transmit data as phase modulated signals becomes higher, signals of very similar phases represent different data, and therefore very accurate demodulation of signal phase is required.

The conventional modem does not require very accurate demodulation and phase compensation because the transmission rate is low. However, when such a modem is applied to the demodulation of signals with a high transmission rate, signal deterioration factors cannot be removed perfectly, resulting in a problem that phase errors become numerous.

Attempts have been made to eliminate the necessity for increased signal phase accuracy during demodulation when the transmission rate is high, by automatically compensating for errors using convolutional encoding, namely a maximum likelihood encoding method such as Viterbi encoding or multidimensional trellis encoding, etc. However, this method cannot properly realise phase compensation of the received signal and thus is not always recommendable as the way to perform compensation.

In addition, the conventional structure explained above allows high trackability for distortion of phase error to be obtained. This is achieved by using a non-probabilistic decision circuit which can suppress delay within the loop to zero for the control of CAPC 12 by feedback of non-probabilistic decision error.

However, when higher trackability is obtained, a problem arises that a noise bandwidth of CAPC 12 becomes wider and the S/N characteristic is deteriorated.

Therefore, it is desirable to reduce trackability and improve the S/N characteristic. However, in this case, an undesirably large burden is placed on the prediction filter 14 in the successive stage.

Accordingly, it has been attempted to optimise the S/N characteristic by searching for some intermediate point. However, the inventors of the present invention have found that even when various coefficients are optimised with such a structure, phase error still occurs and highly accurate compensation is impossible.

US-A-3 887 874 discloses that the equivalent of a low pass filter can be produced by increasing the frequency of the signal to be filtered by carrier modulating it, bandpass filtering the signal, and demodulating the filtered signal.

According to the present invention there is provided a line signal deterioration removing system, comprising:-

an automatic equalising means for removing intersymbol interference from signal point information on the complex plane of a signal received on the transmission line;
a carrier automatic phase control means for removing phase error and frequency offset included in the equalised output of said automatic equalising means;
a prediction filter means for removing phase jitter included in an output of said carrier automatic phase control means; and
a decision means for deciding transmitted signal points based on an output of said prediction filter means and for outputting a decision error corresponding to the difference between a decided signal point and received signal point;

characterised in that said prediction filter means comprises:-

a first modulation means for modulating a vector input derived from the equalized output of said automatic equalizing means with a predetermined frequency after delaying such input for a required number of symbols for normalisation;
a second modulation means for modulating said decision error with said frequency after normalisation for optimizing the prediction filter means; and
a demodulation means for recovering a prediction filter output by demodulation with said frequency;

whereby the frequency operation region of said prediction filter means is shifted by said modulation frequency.

An embodiment of the present invention may provide a method and an apparatus for realising highly accurate phase compensation with a structure for phase compensation of a received signal.

An embodiment of the present invention may provide a line signal deterioration compensating system using an automatic equaliser, namely a method and an apparatus for making decisions with high accuracy in respect of signals after removal of phase jitter interference through preceding equalisation by an automatic equaliser.

An embodiment of the present invention may provide a method and an apparatus for realising a high S/N characteristic by removing phase jitter and improving the frequency offset and phase error removing function.

An embodiment of the present invention may provide a data modem which may also be applied to a maximum likelihood encoding transmission system such as a Viterbi encoding system, a multidimensional trellis encoding system, etc., and which is capable of making decisions with high phase accuracy in relation to data.

The inventors of the present invention have found as a result of analysis for the uncompensated element that in an automatic equaliser formed by a transversal-type filter, signals are shifted from tap to tap, from the past to the future, in order to compensate for intersymbol interference. The phase jitter element included in one of a plurality of received signals is partly uncompensated because such element has an effect on the output signal while it exists on the taps.

Therefore, phase jitter can be reliably compensated by removing or suppressing influence on the phase jitter during compensation for intersymbol interference with a predetermined removing circuit, before removing phase jitter using a prediction filter.

In an embodiment of the present invention, a response time constant of a CAPC is set to a large value in order to stabilise operations of the CAPC. Thereby, the trackability for phase jitter of lower frequencies may be reduced. This phase jitter is removed by predicting it with the prediction filter. In this case, since the prediction filter is formed by a transversal-type filter providing a limited number of taps for shifting signals, it shows remarkably low trackability for lower frequencies. However, in an embodiment of the present invention a frequency shift means, for multiplying the input signal of operation frequency of the prediction filter with a predetermined frequency, is provided at the stage preceding the prediction filter. Thereby, the prediction filter can process the high-frequency signal and has sufficient ability to remove low frequency phase jitter.

Reference is made, by way of example, to the accompanying drawings, in which:-

Fig. 1 is a schematic diagram for assistance in explaining principles utilised in the present invention;
Fig. 2 is a structure indicating the principle of a system to which the present invention may be applied;
Fig. 3 is a diagram for explaining an allocation condition of a phase jitter interference cancelling function;
Fig. 4 shows a line model;
Fig. 5 is a structural diagram of a fixed equaliser;
Fig. 6 and Fig. 7 are diagrams for explaining an unconditioned line characteristic and equalising characteristic;
Fig. 8 is a structural diagram of a phase jitter prediction circuit;
Fig. 9 is an entire structural diagram of an embodiment of the present invention; and
Fig. 10 is an algorithm diagram of a detailed embodiment of the essential portion of the present invention realised with a digital signal processor.

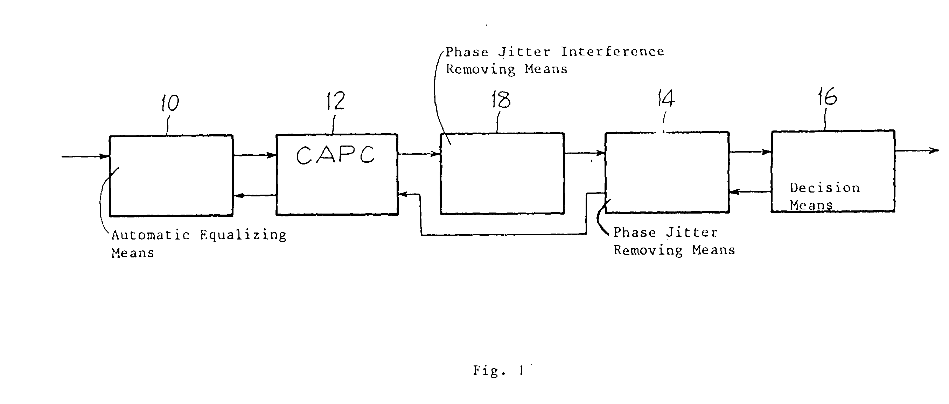

In Fig. 1, an automatic equalising means 10 removes an intersymbol interference element from the signal point information on the complex plane or pass band signal demodulated from the received signal of the transmission line. A carrier automatic phase control means (CAPC) 12 removes a phase error and frequency offset element included in the equalised output of the automatic equalising means 10.

A phase jitter removing means 14 removes a phase jitter element included in the output of the CAPC 12.

A decision means 16 decides on a most likely signal point in the complex plane. In the case of a probabilistic decision, this is done using redundancy added at the sending side, based on an output of the phase jitter removing means 14. In the case of a non-probabilistic decision, the decision means 16 makes a direct decision by using a table. In either case, an error is generated between the ideal receiving point and the actual receiving point.

In the arrangement of Fig. 1, a phase jitter interference removing means 18 is additionally provided at a stage after the automatic equalising means 10 and CAPC 12.

In embodiments of the present invention, modulating means and demodulating means are provided before and after a phase jitter prediction filter provided in the phase jitter removing means 14, and moreover a modulating means is provided for the feedback signal to the prediction filter.

A phase jitter interference removing means 18 receives phase jitter influenced by compensation for intersymbol interference and frequency offset in the automatic equalising means 10 and CAPC 12.

The phase jitter interference removing means 18 filters such received signals with a filter having a characteristic approximated to the line characteristic, such as a fixed filter, and amplifies and extracts only the transmitted signal and phase jitter as outputs.

An output of the phase jitter interference removing means 18 is supplied to the phase jitter removing means 14. This phase jitter removing means 14 removes the amplified phase jitter and phase jitter element from the combined transmitted signals and then supplies the phase-jitter-free signal to the deciding means 16.

In embodiments of the present invention, the phase jitter removing means 14 is capable of processing a low frequency phase jitter at a higher frequency since it can raise the input signal frequency up to the determined frequency.

This enables the S/N characteristic to be improved because phase jitter becomes a signal which can be processed easily on the frequency axis.

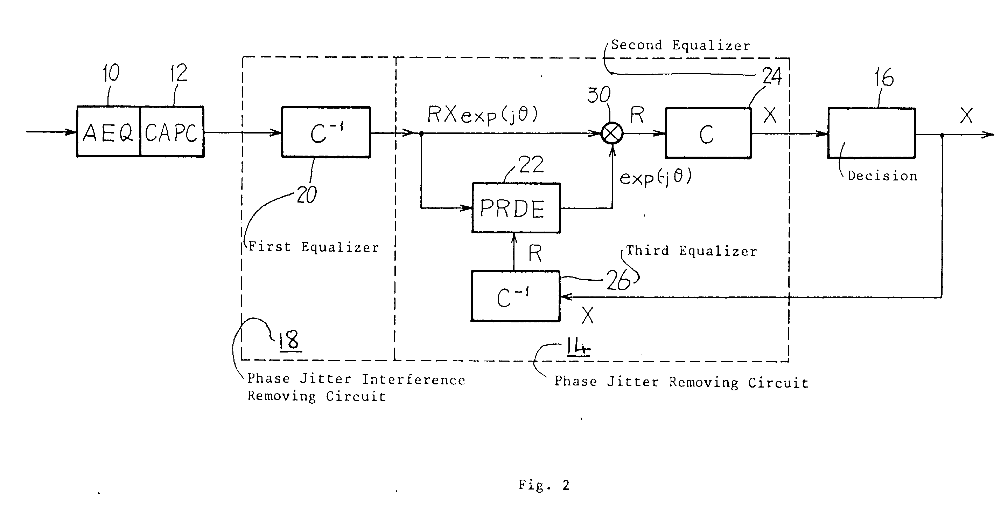

Fig. 2 is a structural diagram of a system to which the present invention may be applied.

In Fig. 2, 10 is an automatic equaliser (AEQ), which effects equalised compensation for removing intersymbol interference, included in the received point co-ordinate data obtained by demodulating signal points on the complex plane from the received signal of the transmission line (telephone line).

12 designates a carrier automatic phase control circuit (CAPC), which removes phase error and frequency offset which are line deterioration factors included in an output of the automatic equaliser 10. Following the CAPC 12, a phase jitter interference removing circuit 18 is provided and this phase jitter interference removing circuit 18 is realised by a first fixed equaliser 20. Details of the circuit 18 will be given later.

Disposed to follow the phase jitter interference removing circuit 18 is a phase jitter removing circuit 14, which is provided with a phase jitter prediction circuit 22 and second and third fixed equalisers 24, 26. These circuits will be explained later.

Following the phase jitter removing circuit 14, a decision circuit 16 is provided. This decides and outputs the most likely signal point corresponding to the received signal point on the basis of maximum likelihood decoding, namely Viterbi decoding corresponding to addition of redundant one bit due to the trellis encoding conducted for error control in the transmitting side. Moreover, a decision error output (a probabilistic decision error output) of decision circuit 16 is fed back as a normalised output in order to optimise the phase jitter prediction circuit 22 of the phase jitter removing means. The phase jitter interference removing circuit 18 is provided after the CAPC 12 and before the phase jitter removing circuit 14 as shown in Fig. 2. The reason for this will now be explained.

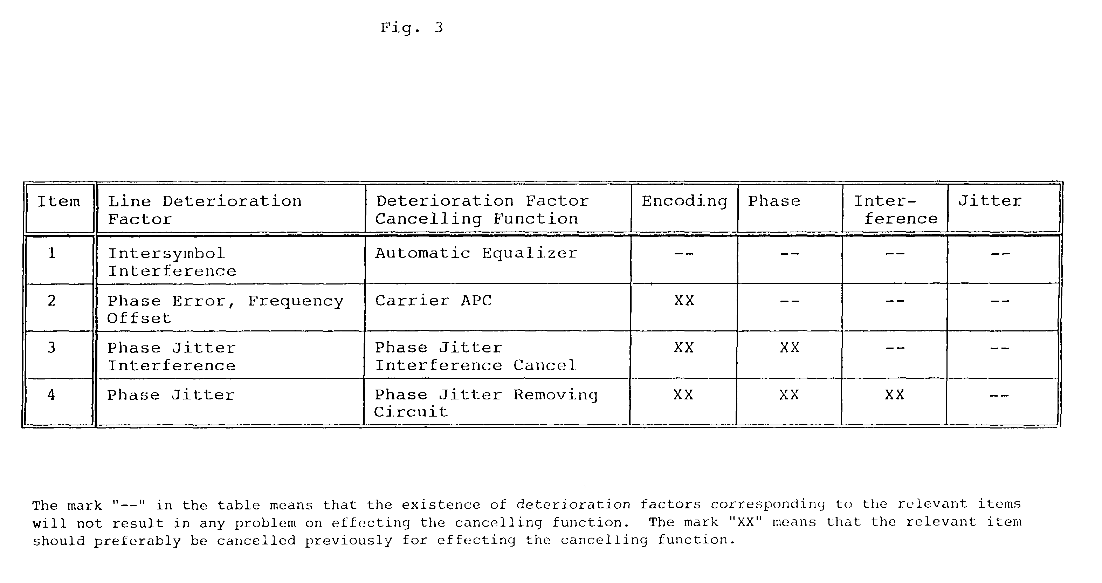

Fig. 3 indicates the correspondence between cancelling functions on the receiving side and each of the deterioration factors intersymbol interference, phase error/frequency offset, phase jitter interference and phase jitter, these being the major deterioration factors in the transmission line. The right hand side of the Figure indicates the necessity for cancelling other deterioration factors before a certain deterioration factor is cancelled.

As will be clear from Fig. 3, it is desirable for the purpose of phase jitter interference cancellation newly provided by the present invention first to cancel intersymbol interference and phase error/frequency offset, but it does not matter if phase jitter is not first cancelled. On the other hand, it is desirable for the purposes of phase jitter removal first to cancel intersymbol interference, phase error/frequency offset and phase jitter interference.

Accordingly, the phase jitter interference removing circuit 18 is located after the CAPC 12 and before the phase jitter removing circuit 14 as shown in Fig. 2. Thereby, phase jitter interference can be removed by supplying an output signal, from which intersymbol interference is removed with the automatic equaliser 10 and phase error and frequency offset are removed with the CAPC 12, to the phase jitter interference removing circuit 18.

Next, the factors concerning generation of phase jitter interference, to be removed by the embodiment of Fig. 2, are discussed as follows.

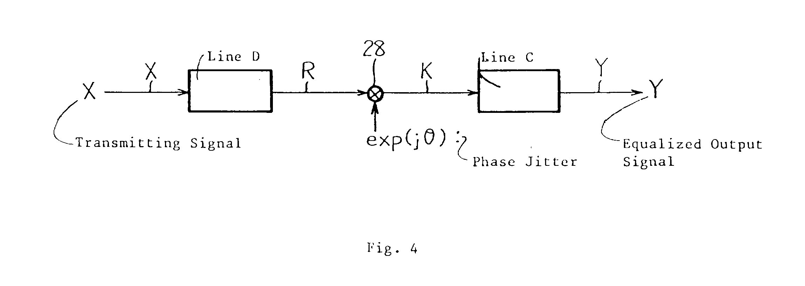

Phase jitter interference depends on the characteristics of the part of the transmission line after an insertion point of the phase jitter. A line model shown in Fig. 4 can be used to model the transmission line for the purposes of removing phase jitter interference.

The conditions used for determining the line model shown in Fig. 4 are as follows:-

(1) An inserting point 28 of phase jitter $\exp(j\theta)$ is assumed to be a single point. Since a transmission line is usually formed as a multilink structure, phase jitter is actually inserted at a plurality of points, but for simplification of the model, the phase jitter causing most deterioration is considered to originate from only one point.

(2) In this model, the inserting point 28 of phase jitter $\exp(j\theta)$ should be considered for insertion in both transmitting and receiving sides. That is, insertion in both sides must be considered so as to cover the actual situation and characteristic evaluation of a real transmission line.

(3) The line characteristic where phase jitter $\exp(j\theta)$ does not exist is assumed to be flat. Namely, it is defined that the product of line characteristic D and line characteristic C, $D \cdot C = 1$.

A typical line model as shown in Fig. 4 can be obtained by considering the above conditions (1) to (3).

In Fig. 4, X indicates a transmitted signal, which becomes a signal R under the influence of line characteristic D, becomes a signal K due to the influence of phase jitter $\exp(j\theta)$ at the phase jitter inserting point 28, and then becomes an equalised output signal Y as a result of line characteristic C.

Next, the phase jitter interference element to be removed, of the model shown in Fig. 4 will be investigated as follows.

First, the transmitting signal X changes to the R signal due to the influence of deterioration factors by line characteristic D, and this R signal is expressed as:-

$$R = X \cdot D \tag{1}$$

Thereafter, this signal changes to the K signal due to the influence of deterioration factors by phase jitter exp $(j\theta)$ at the phase jitter inserting point 28. This K signal is expressed as:-

$$K = R \times \exp(j\theta) \tag{2}$$

Moreover, the K signal changes to a Y signal due to the influence of deterioration factors by line characteristic C. The Y signal is expressed as:-

$$Y = K \cdot C = R \times \exp(j\theta) \cdot C = \text{equalised output} \tag{3}$$

Therefore, since $D \cdot C = 1$ from the condition (3), the formula (3) may be developed as follows:-

$$Y = R \times \exp(j\theta) \cdot C$$

$$= R \cdot C + R \times \exp(j\theta) \cdot C - R \cdot C$$

$$= X \cdot D \cdot C + R \{\exp(j\theta) - 1\} \cdot C$$

$$= X + R \{\exp(j\theta) - 1\} \cdot C \tag{4}$$

$R \{\exp(j\theta) - 1\} \cdot C$ in the final term of formula (4) indicates (phase jitter) + (phase jitter interference element); these coupled deterioration factors of phase jitter and phase jitter interference always exist in a line where phase jitter exists.

Accordingly, the phase jitter interference is cancelled on the basis of the results of computations for the phase jitter interference element, using the final term of formula (4).

The structure of the system shown in Fig. 2, based on investigation of phase jitter interference proposed for the line model of Fig. 4, will now be explained in detail.

In Fig. 2, as an input of the phase jitter interference removing circuit 18, there is used a signal from which intersymbol interference and phase frequency offset have been eliminated by the automatic equaliser 10 and CAPC 12. This output signal includes only the (phase jitter) + (phase jitter interference element) indicated by the second term in the right hand side of the formula (4).

The phase jitter interference removing circuit 18 comprises a first equaliser 20 in which is set the line equalising characteristic $C^{-1}$ for the line characteristic C of the phase jitter inserting point 28 and successive points shown in Fig. 4. This eliminates the phase jitter interference element by effecting equalising compensation using the line equalising characteristic $C^{-1}$ upon the output of CAPC 12. That is, since an output of CAPC 12 is expressed as $X + R \{\exp(j\theta) - 1\} \cdot C$, the term $R \times \exp(j\theta)$ including only the phase jitter element and free from the phase jitter interference element, can be obtained by performing equalised compensation based on the line equalising characteristic $C^{-1}$ upon such output. Elimination of the phase jitter interference element by the first equaliser 20 also newly generates intersymbol interference,but such intersymbol interference newly generated by the first equaliser 20 may be cancelled, if necessary, by providing an additional equaliser at the stage preceding the decision circuit 16.

Next, an output from which the phase jitter interference element is removed in the first equaliser 20 is applied to the phase jitter prediction circuit 22 provided in the phase jitter removing circuit 14 in the next stage, and thereby the phase jitter element $\exp(-j\theta)$ is computed. The output $\exp(-j\theta)$ of prediction circuit 22 is applied to the multiplying point 30 to obtain R by removing phase jitter $\exp(-j\theta)$ from the output of first equaliser 20. Following the multiplying point 30, a second equaliser 24 is provided in view of the provision of the first equaliser 20 for removing phase jitter interference. The line characteristic C, which is the inverse characteristic of the line characteristic $C^{-1}$ of the first equaliser 20, is set in the second equaliser 24. Thereby, an equalised output X can be obtained by applying equalisation with the equalisation characteristic C to the output R from the multiplying point 30.

The output X from the phase jitter removing circuit 14 thus obtained is sent to the decision circuit 16 to decide the most likely signal point by Viterbi decoding, and this deciding point is output as the final receiving point. Thereby, the receiving point is converted, as is well known, into a bit train corresponding to the co-ordinates on the complex plane of the decided point using a bit map circuit (not illustrated).

Moreover, a probabilistic decision error from the decision circuit 16 is fed back, after normalisation, to the phase jitter prediction circuit 22 provided in the phase jitter removing circuit 14, and the normalised output of decision circuit 16 receives equalised compensation by a third equaliser 26 provided in the feedback loop. That is, a line equalising characteristic C which is the same as that of the first equaliser 20 for removing phase jitter interference is set in the third equaliser 26. The prediction circuit 22 can be optimised by obtaining the output R by conducting equalised compensation based on the line equalising characteristic $C^{-1}$ upon the normalised output from the decision circuit 16, and then feeding back such output R to the prediction circuit 22.

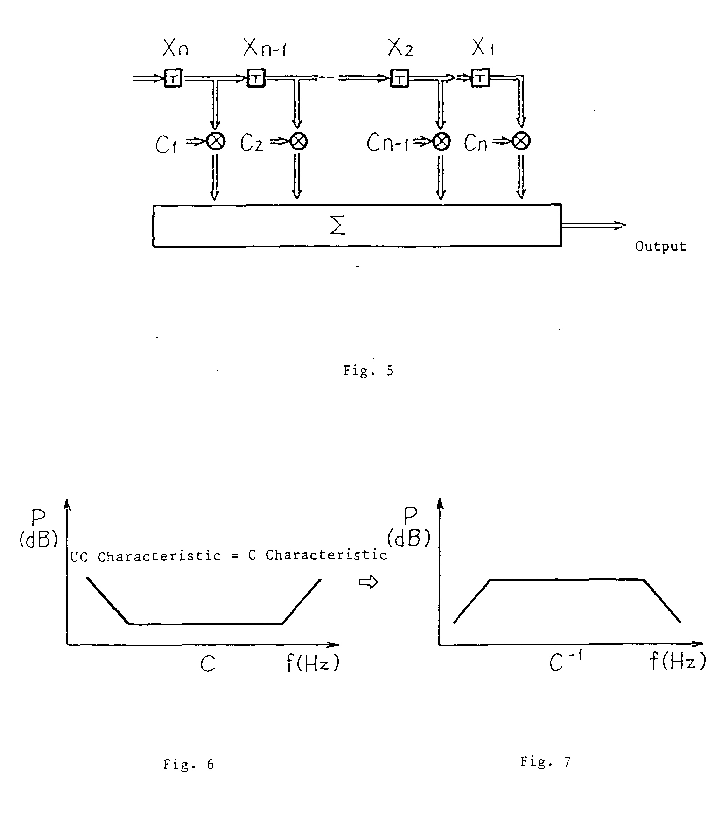

When the line equalising characteristics $C^{-1}$, C of the equalisers are set as active characteristics of the first equaliser 20, second equaliser 24 and third equaliser 26 shown in Fig.2, the line where phase jitter does not exist has infinite coefficient solutions and it becomes difficult to stabilise the system. Therefore, as shown in Fig. 5, a transversal type fixed equaliser is used as the first, second and third equalisers 20, 24, 26 and fixed constants are set, from an experimental viewpoint, as the counting numbers C1 to Cn of the fixed equalisers.

Since the counting numbers C1 to Cn of the fixed counters shown in Fig. 5 have the unconditioned characteristics shown in Fig. 6 as the typical line characteristics, this unconditioned characteristic of Fig. 6 is considered as the line characteristic $C^{-1}$ of the phase jitter inserting point 28 and the successive points shown in Fig. 4.

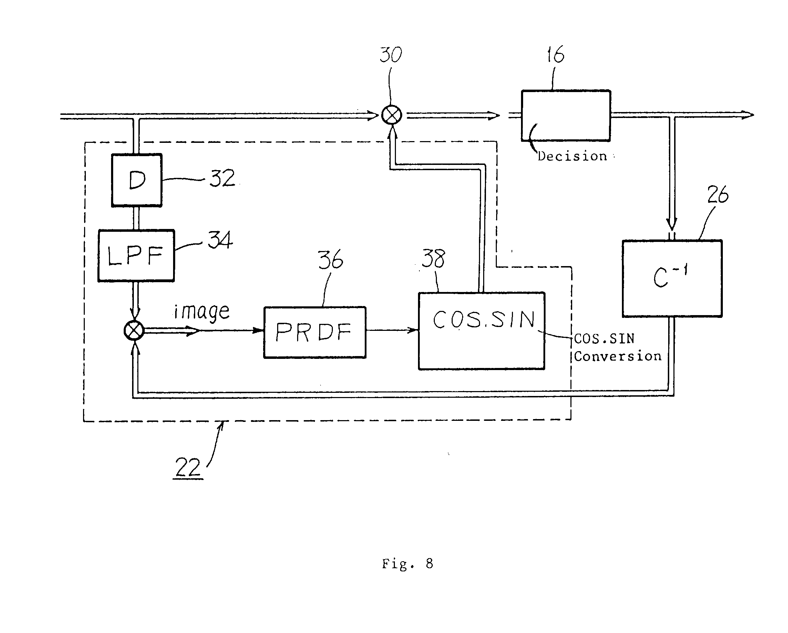

In the system of Fig. 2 for the unconditioned characteristic of Fig. 6, the coefficients C1 to Cn of the transversal type fixed equalisers shown in Fig. 5 are set in the first equaliser 20 and third equaliser 26 so that the inverse characteristic $C^{-1}$ of the unconditioned characteristic of Fig. 6 shown in Fig. 7 can be obtained. Meanwhile, the coefficients C1 to Cn of the fixed equalisers of Fig. 5 are set in the second equaliser 24 of Fig. 2 so that the unconditioned characteristic of Fig. 6 can be obtained.

The line equalising characteristics $C^{-1}$, C to be set in the equalisers 20, 24, 26 of Fig. 2 are not limited just to the unconditioned characteristic, and an equalising characteristic based on other adequate typical line characteristics can be set instead.

Fig. 8 indicates a practical structure of the phase jitter prediction circuit 22 provided in the phase jitter removing circuit 14.

In the phase jitter prediction circuit 22 shown in Fig. 8, an output from the first equaliser 20 shown in Fig. 2 is multiplied by the normalised output which is equalised and compensated by the third equaliser through a delay circuit 32 and a low-pass filter 34, and thereafter supplied to the prediction filter 36 after conversion into a scalar value in order to predict the phase jitter element. The output of prediction filter 36 is converted back to vector data by a cos/sin converter 38, and multiplied at the multiplying point 30 to remove the phase jitter element.

A delay circuit 32 shown in Fig. 8 is necessary in the case where the decision circuit 16 makes a probabilistic decision through Viterbi decoding, but is unnecessary for non-probabilistic decision in the decision circuit 16, namely for deciding the nearest signal point on the complex plane for the demodulation receiving point without using a transition rule by trellis encoding in the transmitting side.

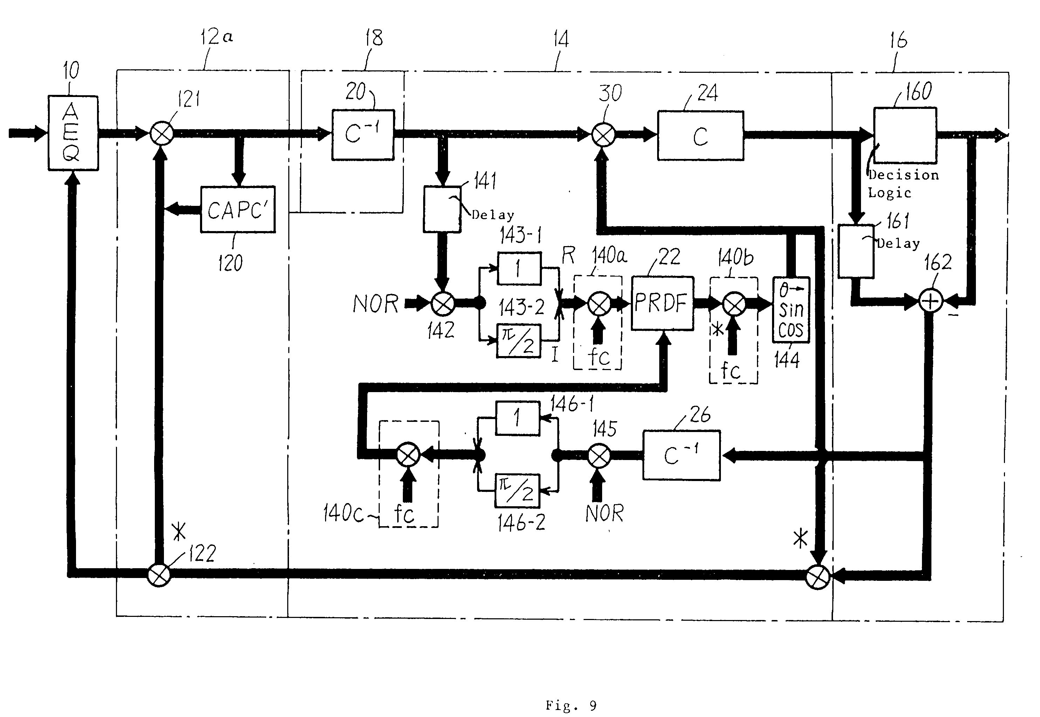

Fig. 9 is a diagram of the entire structure of an embodiment of the present invention.

In Fig. 9, reference numeral 10 designates an automatic equaliser (AEQ) which receives as input co-ordinate data of the receiving point demodulated from the received signal of the transmission line, i.e. the receiving point vector data or pass band signal, and provides an equalised output which is compensated for intersymbol interference in the input vector data.

Following the automatic equaliser 10, a carrier phase controller 12a is provided. This includes a carrier automatic phase control circuit 120 which computes a frequency offset and phase error element included in the equalised output of automatic equaliser 10, and these elements are removed from the equalised output by applying them to a multiplying circuit 121. This carrier phase controller 12a is already disclosed by the drawings of specifications, for example, of Japanese Published Patent Application No. 55-33203 or U.S. Patent No. 4,097,807. Moreover, the carrier automatic phase control circuit 120 is known as a secondary CAPC circuit because it is provided following the automatic equaliser 10.

Following the carrier phase control 12a, the phase jitter interference remover 18 described previously is provided to remove and suppress the elements, other than the true phase jitter element in the line, from whatever phase jitter is not removed perfectly in the carrier phase controller 12a. Next to the phase jitter interference remover 18, the phase jitter removing means 14 is provided. This removes the phase jitter element from an output, in which the phase jitter element is amplified, of the phase jitter interference remover 18.

Following the phase jitter remover 14, a decision circuit 16 is provided. The decision circuit 16 is provided with a probabilistic or non-probabilistic decision circuit 160, which decides, in the case of a probabilistic decision, the most likely signal point on the complex plane and corrects an error in the receiving signal point by utilising a degree of redundancy added at the transmitting side. That is, since a redundant bit is added for controlling errors by a trellis encoding circuit provided in the data modem in the transmitting side, the most likely signal point is decided by Viterbi decoding utilising single redundant bits added by trellis encoding. On the other hand, in the case of a non-probabilistic decision, the decision is made directly by using a table.

The receiving decision point determined by the probabilistic or non-probabilistic decision circuit 160 is given to a co-ordinates/bit train converting circuit (not illustrated) provided in the successive stage, and is then converted to the bit train corresponding to the signal points.

Moreover, the decided output of the decision circuit 160 is applied to one input of an adder 162, and an input to the decision circuit 160 is applied through a delay circuit 161 to the other input of adder 162, in order to extract a difference between the decision point and the receiving point obtained through the delay circuit 161, namely the probabilistic or non-probabilistic decision error.

The decision error obtained from the adder 162 is fed back to the phase jitter remover 14 and is then used for optimisation of a prediction filter as explained later.

For improvement of the S/N characteristic, it is necessary to narrow the noise bandwidth of carrier phase controller 12a, and the time constants of controller 12a are set larger for this purpose. For instance, a degree of feedback to the multiplier 121 in the CAPC 120 of Fig. 9 is set to smaller value. As a result, the trackability of low speed jitter (low frequency jitter) by the carrier automatic phase control circuit is lowered and the carrier phase controller 12a can no longer sufficiently remove low frequency jitter.

Therefore, the low frequency jitter which is not sufficiently removed by the carrier phase controller 12a has to be removed by the phase jitter remover 14 in the next and successive stages; however, the prediction filter 22 provided in the phase jitter remover 14 has very weak trackability for low frequency because a number of taps thereof is finite. Accordingly, even when the prediction filter 22 of phase jitter remover 14 is operated directly, it cannot follow low frequency jitter and therefore cannot remove phase jitter sufficiently.

Therefore, the present invention can realise tracking of low frequency jitter by shifting the operation frequency range of the filter 22 to a higher frequency region.

The phase jitter remover 14 is explained in detail as follows.

First, the receiving point data, namely receiving point vector data from which the intersymbol interference, frequency offset and phase error have been removed by the automatic equaliser 10 and carrier phase controller 12a, is taken through the delay circuit 141 and is multiplied with a normalised signal NOR in the multiplier 142. Thereafter, only the imaginary element is extracted and the vector elements, namely the co-ordinate value R on the real number axis and the co-ordinate value I on the imaginary number axis in the complex plane based on the input vector data, are generated by the Hilbert filters 143-1, 143-2.

The vector elements R, I, generated by the Hilbert filters 143-1, 143-2, are input to the prediction filter 22 after frequency-modulation by frequency fc in the modulation circuit 140a. That is, the frequency is shifted to the right (increased) by +fc. From the prediction filter 22, the vector elements R, I, indicating computed phase jitter elements, are applied to the demodulation circuit 140b provided in the output stage, where they are returned to the original frequency through demodulation by frequency fc, then applied to the multiplier 30 after conversion back to vector data by the $\theta$ - sin $\theta$, cos $\theta$ conversion circuit 144. In the multiplier 30, the phase jitter element included in the output given via the carrier phase controller 12 and phase jitter interference remover 18 is removed.

In addition, the probabilistic or non-probabilistic decision error from the adder 162 provided in the decision part 16 is normalised by NOR (normalised data) of a multiplier 145, given to the third equaliser 26 as explained previously, and thereafter converted to the vector elements R, I, by the Hilbert filters 146-1, 146-2. This error signal as a normalised vector element is applied to the modulation circuit 140c and is frequency-modulated by the frequency fc as in the case of modulation circuit 140a, and thereafter applied as the error signal for optimising the prediction filter 22.

The operation frequency region of prediction filter 22 is changed, by the modulation circuits 140a, 140c and demodulation circuit 140b provided at the input/output ends of prediction filter 22, to a higher frequency operation region in which the frequency is shifted by the modulation frequency fc. This frequency shift of the operation region allows the prediction filters 14-1, 14-2, which provide only weak tracking at lower frequencies, to follow lower frequency jitter satisfactorily. Moreover, low frequency jitter which has not yet been removed by the carrier phase controller 12a is also predicted accurately by the prediction filter 22 and can be removed by the multiplier 30.

The automatic equaliser 10, carrier phase controller 12a, phase jitter interference remover 18, phase jitter remover 14 and decision circuit 16 shown in Fig. 9 can be implemented using a digital signal processor (DSP).

Fig. 10 is a structural diagram of an embodiment indicating the algorithm, realised by a DSP, of the phase jitter prediction circuit 22 provided in the phase jitter removing circuit 14 of Fig. 8. In this Figure, T indicates a tap register; $\otimes$, multiplication; $\oplus$, addition and $\Sigma$, summing (totalisation). The arrow mark without any coefficient code denotes a constant value.

In Fig. 10, a vector input and a scalar input are given to the phase jitter prediction circuit. The scalar input is given to the prediction filter 22 through a low-pass filter 34. The normalised vector input is applied, after equalisation with the line equalising characteristic $C^{-1}$, to the prediction filter 22. A predicted signal of the prediction filter 22 is frequency-shifted by the demodulating computation 140b, then converted into vector data by the cos/sin converting circuit 144, normalised in its amplitude in the amplitude normalising circuit 144', and is then input to the multiplying point 30 to cancel the phase jitter element included in the vector input.

As explained previously, it is possible to substantially remove deterioration factors of a transmission line by removing phase jitter interference generated in the line after the phase jitter factor inserting point, and to realise high-quality data transmission for a super-high-speed modem by improving the S/N error rate and also extending the application range.

Moreover, according to the invention, even if low-frequency jitter is not perfectly removed due to raising CAPC time constants for improving the S/N characteristic, a next-stage prediction filter which was previously inferior in tracking at lower frequencies can be made to follow low-frequency jitter satisfactorily, by operating the filter in a shifted frequency operation region. Low-frequency jitter left through the carrier phase control by feedback of probabilistic or non-probabilistic decision error can also be suppressed and removed by effectively utilising the prediction filter.

**Claims**

1.  A line signal deterioration removing system, comprising:-

    an automatic equalising means (10) for removing intersymbol interference from signal point information on the complex plane of a signal received on the transmission line;
    a carrier automatic phase control means (120) for removing phase error and frequency offset included in the equalised output of said automatic equalising means (10);
    a prediction filter means (14) for removing phase jitter included in an output of said carrier automatic phase control means (120); and
    a decision means (16) for deciding transmitted signal points based on an output of said prediction filter means (14) and for outputting a decision error corresponding to the difference between a decided signal point and received signal point;

    characterised in that said prediction filter means (14) comprises:-

    a first modulation means (140a) for modulating a vector input derived from the equalized output of said automatic equalizing means (10) with a predetermined frequency (fc) after delaying such input for a required number of symbols for normalisation;
    a second modulation means (140c) for modulating said decision error with said frequency (fc) after normalisation for optimizing the prediction filter means (14); and
    a demodulation means (140b) for recovering, from an input derived from the output of said first and second modulation means, a prediction filter output by demodulation with said frequency (fc) ;

    whereby the frequency operation region of said prediction filter means (14) is shifted by said modulation frequency (fc).

2.  A system according to claim 1, wherein the frequency operation region of said prediction filter means (14) is shifted higher by said modulation frequency ($f_c$) such that the frequency of the output signal from both the first modulation means (140a) and the second modulation means (140c) is increased.

3.  A system according to claim 1 or 2, wherein the vector information to be input to said first and/or second modulation means (140a, 140c) is first divided into real and imaginary vector elements (R, I) by filtering means (143-1, 143-2; 146-1, 146-2).

4.  A system according to claim 3, wherein the output of said first and/or second modulation means (140a, 140c) is converted back to vector information by converting means (144).

**Patentansprüche**

1.  Signalleitungsverschlechterungsentfernungssystem mit:-

    einem automatischen Entzerrungsmittel (10) zum Entfernen einer Symbolinterferenz aus Signalpunktinformationen auf der komplexen Ebene eines Signals, das auf der Übertragungsleitung empfangen wird;
    einem automatischen Trägerphasensteuermittel (120) zum Entfernen eines Phasenfehlers und einer Frequenzversetzung, die in der entzerrten Ausgabe des automatischen Entzerrungsmittels (10) enthalten sind;

einem Prädiktionsfiltermittel (14) zum Entfernen eines Phasenjitters, der in einer Ausgabe des automatischen Trägerphasensteuermittels (120) enthalten ist; und

einem Bestimmungsmittel (16) zum Bestimmen von übertragenen Signalpunkten auf der Basis einer Ausgabe des Prädiktionsfiltermittels (14) und zum Ausgeben eines Bestimmungsfehlers, der der Differenz zwischen einem bestimmten Signalpunkt und einem empfangenen Signalpunkt entspricht;

dadurch gekennzeichnet, daß das Prädiktionsfiltermittel (14) umfaßt:-

ein erstes Modulationsmittel (140a) zum Modulieren einer Vektoreingabe, die aus der entzerrten Ausgabe des automatischen Entzerrungsmittels (10) abgeleitet wird, mit einer vorbestimmten Frequenz (fc) nach dem Verzögern solch einer Eingabe für eine erforderliche Anzahl von Symbolen zur Normierung;

ein zweites Modulationsmittel (140c) zum Modulieren des genannten Bestimmungsfehlers mit der genannten Frequenz (fc) nach der Normierung zum Optimieren des Prädiktionsfiltermittels (14); und

ein Demodulationsmittel (140b) zum Wiederherstellen, aus einer Eingabe, die von der Ausgabe der ersten und zweiten Modulationsmittel abgeleitet wird, einer Prädiktionsfilterausgabe durch Demodulation mit der genannten Frequenz (fc);

wodurch die Frequenzoperationszone des Prädiktionsfiltermittels (14) um die genannte Modulationsfrequenz (fc) verschoben wird.

2.  System nach Anspruch 1, bei dem die Frequenzoperationszone des Prädiktionsfiltermittels (14) um die genannte Modulationsfrequenz (fc) nach oben verschoben wird, so daß die Frequenz des Ausgangssignals sowohl von dem ersten Modulationsmittel (140a) als auch von dem zweiten Modulationsmittel (140c) erhöht wird.

3.  System nach Anspruch 1 oder 2, bei dem die Vektorinformationen, die dem ersten und/oder dem zweiten Modulationsmittel (140a, 140c) einzugeben sind, durch Filtermittel (143-1, 143-2; 146-1, 146-2) zuerst in reale und imaginäre Vektorelemente (R, I) geteilt werden.

4.  System nach Anspruch 3, bei dem die Ausgabe des ersten und/oder des zweiten Modulationsmittels (140a, 140c) durch ein Konvertierungsmittel (144) zurück in Vektorinformationen konvertiert wird.

**Revendications**

1.  Système d'élimination de détérioration de signaux de ligne comprenant :

un dispositif d'égalisation automatique (10) pour éliminer une interférence entre symboles à partir des informations de point de signal sur le plan complexe d'un signal reçu sur la ligne de transmission ;

un dispositif de commande de phase automatique de porteuse (120) pour éliminer une erreur de phase et un décalage de fréquence compris dans la sortie égalisée dudit dispositif d'égalisation automatique (10) ;

un dispositif de filtre de prédiction (14) pour éliminer une instabilité de phase comprise dans une sortie dudit dispositif de commande de phase automatique de porteuse (120) ; et

un dispositif de décision (16) pour décider des points de signal transmis sur la base d'une sortie dudit dispositif de filtre de prédiction (14) et pour fournir une erreur de décision correspondant à la différence entre un point de signal décidé et un point de signal reçu ;

caractérisé en ce que ledit dispositif de filtre de prédiction (14) comprend :

un premier dispositif de modulation (140a) pour moduler une entrée vectorielle déduite de la sortie égalisée dudit dispositif d'égalisation automatique (10) avec une fréquence prédéterminée (fc) après avoir retardé cette entrée d'un nombre de symboles requis pour une normalisation ;

un second dispositif de modulation (140c) pour moduler ladite erreur de décision avec ladite fréquence (fc) après normalisation pour optimiser le dispositif de filtre de prédiction (14) ; et

un dispositif de démodulation (140b) pour récupérer à partir d'une entrée déduite de la sortie desdits premier et second dispositifs de modulation, une sortie de filtre de prédiction par démodulation avec ladite fréquence (fc) ;

de sorte que la zone de fonctionnement de fréquence dudit dispositif de filtre de prédiction (14) est décalée de ladite fréquence de modulation (fc).

**2.** Système selon la revendication 1, dans lequel la zone de fonctionnement de fréquence dudit dispositif de filtre de prédiction (14) est décalée vers le haut par ladite fréquence de modulation (fc) pour que la fréquence du signal de sortie à la fois du premier dispositif de modulation (140a) et du second dispositif de modulation (140c) soit augmentée.

**3.** Système selon la revendication 1 ou 2, dans lequel les informations vectorielles à entrer dans lesdits premier et/ ou second dispositifs de modulation (140a, 140c) sont d'abord divisées en éléments vectoriels réels ou imaginaires (R, I) par un dispositif de filtrage (143-1, 143-2, 146-1, 146-2).

**4.** Système selon la revendication 3, dans lequel la sortie desdits premier et/ou second dispositifs de modulation (140a, 140c) est reconvertie en informations vectorielles par un dispositif de conversion (144).

Phase Jitter Interference
Removing Means

10  12  18  14  16

CAPC

Decision
Means

Automatic Equalizing
Means

Phase Jitter
Removing Means

Fig. 1

Fig. 2

EP 0 621 712 B1

Fig. 3

| Item | Line Deterioration Factor | Deterioration Factor Cancelling Function | Encoding | Phase | Inter-ference | Jitter |
|------|---------------------------|------------------------------------------|----------|-------|---------------|--------|
| 1 | Intersymbol Interference | Automatic Equalizer | -- | -- | -- | -- |
| 2 | Phase Error, Frequency Offset | Carrier APC | XX | -- | -- | -- |
| 3 | Phase Jitter Interference | Phase Jitter Interference Cancel | XX | XX | -- | -- |
| 4 | Phase Jitter | Phase Jitter Removing Circuit | XX | XX | XX | -- |

The mark "--" in the table means that the existence of deterioration factors corresponding to the relevant items will not result in any problem on effecting the cancelling function. The mark "XX" means that the relevant item should preferably be cancelled previously for effecting the cancelling function.

EP 0 621 712 B1

X Transmitting Signal

Line D

R

28

K

$\exp(j\theta)$ Phase Jitter

Line C

Y Equalized Output Signal

Fig. 4

$$X_n \qquad X_{n-1} \qquad \qquad X_2 \qquad X_1$$

Output

Fig. 5

P (dB)

UC Characteristic = C Characteristic

C    f(Hz)

P (dB)

$C^{-1}$    f(Hz)

Fig. 6

Fig. 7

26

C⁻¹

COS.SIN
Conversion

16

Decision

30

38

COS.SIN

36

PRDF

32

34

D

LPF

image

22

Fig. 8

Fig. 9

EP 0 621 712 B1

18

Fig. 10

Automatic Equalizer (AEQ)

Probabilistic Decision Circuit or
Non-probabilistic Decision Circuit

Carrier Phase Controller

Phase Jitter Remover

Non-Probabilistic
Decision Circuit

Prediction
Filter

(Normalization)

Probabilistic
Decision Error
or Non-Probabilistic
Decision Error

Non-probabilistic
Decision Phase Error

Carrier Automatic
Phase Control Circuit

Fig. 11